(19)

Europäisches Patentamt
European Patent Office
Office européen des brevets

(11) **EP 3 002 861 A1**

(12) **EUROPEAN PATENT APPLICATION**

(43) Date of publication:
06.04.2016 Bulletin 2016/14

(51) Int Cl.:
*H02M 3/158* (2006.01)     *G01R 19/00* (2006.01)
*H02M 1/00* (2006.01)

(21) Application number: 15002415.6

(22) Date of filing: 13.08.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: 24.09.2014  US 201462054587 P
05.12.2014  US 201462088433 P
17.03.2015  US 201514660739
02.04.2015  US 201514677794

(71) Applicant: **Linear Technology Corporation**
**Milpitas, CA 95035-7417 (US)**

(72) Inventors:
• **Zhang, Xu**
**Milpitas, CA 95035 (US)**
• **LI, Jian**
**San Jose, CA 95131 (US)**
• **SHI, Zhouyuan**
**Fremont, CA 94555 (US)**
• **GU, Yi Ding**
**Pleasanton, CA 94588 (US)**

(74) Representative: **Müller-Boré & Partner**
**Patentanwälte PartG mbB**
**Friedenheimer Brücke 21**
**80639 München (DE)**

(54) **DCR INDUCTOR CURRENT-SENSING IN FOUR-SWITCH BUCK-BOOST CONVERTERS**

(57)     An inductor current-sensing circuit for measuring a current in an inductor includes (a) a first RC network coupled between a first terminal of the inductor and a reference voltage source; and (b) a second RC network coupled between a second terminal of the inductor and the reference voltage source. The first RC network and the second RC network each have a time constant substantially equal to the ratio between the inductance and the DC resistance of the inductor. The inductor which current is being measured may be a primary inductor of a four-switch buck boost converter receiving an input voltage and providing an output voltage.

FIG. 1

EP 3 002 861 A1

**Description**

CROSS REFERENCE TO RELATED APPLICATIONS

The present application is related to and claims priority of U.S. provisional patent application ("Copending Provisional Application I"), serial no. 62/054,587, entitled "DCR inductor current sensing for 4 switch buck-boost converters," filed on September 24, 2014. The disclosure of the Copending Provisional Application I is hereby incorporated by reference in its entirety.

The present application is also related to U.S. provisional patent application ("Copending Provisional Application II"), serial no. 62/088,433, entitled "Peak-Buck Peak-Boost Current-Mode Control for Switched Step-up Step-down Regulators," filed on December 5, 2014. The disclosure of the Copending Provisional Application II is hereby incorporated by reference in its entirety.

BACKGROUND OF THE INVENTION

1. Field of the Invention

The present invention relates to measuring an inductor current in a four-switch buck-boost power converter. In particular, the present invention relates to measuring inductor current using an RC circuit referenced to a virtual ground.

2. Discussion of the Related Art

Four-switch buck-boost power converters are used in many different applications. Such a power converter regulates an output voltage which may be higher than, equal to or lower than the input voltage. A typical four-switch buck-boost power converter has a single inductor and operates synchronously to provide high efficiency over a wide range of load currents. In a power converter, to provide over-current protection, discontinuous-mode operation or current loop regulation, inductor current-sensing is normally required. However, in a four-switch buck-boost power converter, current sensing is made difficult by the high common-mode noise that is often present on both terminals of the inductor.

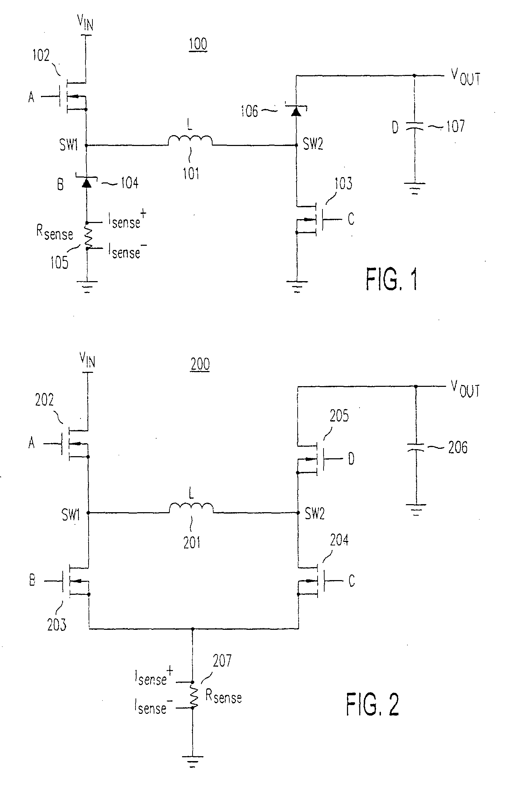

Figure 1 shows a first current-sensing technique using sensing resistors in power converter 100. Such a technique is used, for example, in the LM5118 and LM25118 circuits available from Texas Instruments, Inc., Dallas, Texas. As shown in Figure 1, power converter circuit 100 includes inductor 101, diode 104, sensing resistor 105 and switches 102 and 103. Sensing resistor 105, which is connected in series with diode 104 to one terminal of inductor 101, senses the current in inductor 101 when (and only when) diode 104 is conducting. However, such a configuration cannot sense the peak current in inductor 101.

Figure 2 shows another inductor current-sensing technique in four-switch power converter 200. Four-switch power converter 200 includes inductor 201, switches 202-205, output capacitor 206 and sensing resistor 207. Sensing resistor 207 senses a valley inductor current in "buck" mode (i.e., when switch 205 is maintained in a constant "on" state) and senses a peak inductor current in "boost" mode (i.e., switch 202 is maintained in a constant "on" state). This current-sensing technique is used in the LTC3780, LTC3789, LT3791, LT8705 circuits available from Linear Technology Corporation, Milpitas, California.

The technique of Figures 1 and 2 has two drawbacks. First, both sensing resistor 105 of Figure 1 and sensing resistor 207 of Figure 2 sense only a portion of their respective inductor currents, as each sensing resistor relies on a switch configuration that allows a current flowing in the respective inductor to flow through the sensing resistor. Second, sensing resistor 105 of Figure 1 and sensing resistor 207 of Figure 2 both dissipate power, which may lead to thermal issues in the respective circuits. At the same time, using high-power, precision sensing resistors increases system cost and circuit footprint.

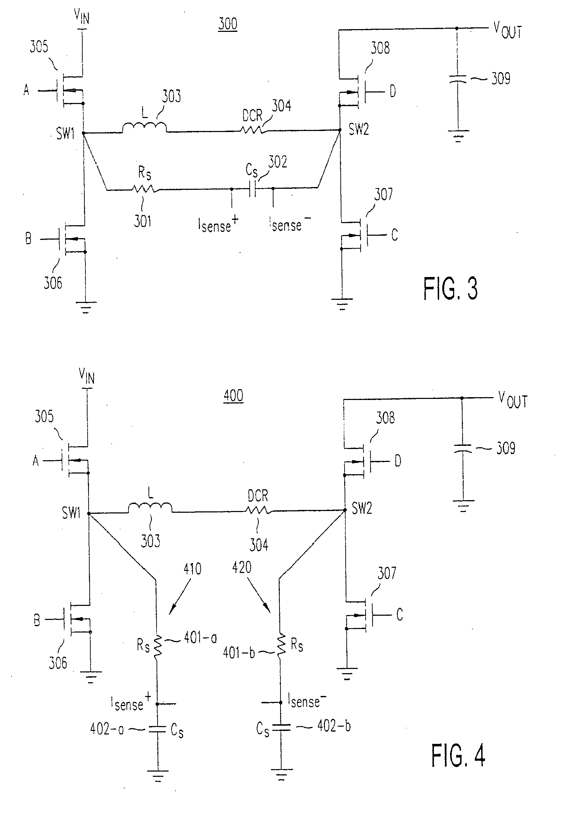

Another current-sensing method, referred to as the "DCR inductor current-sensing scheme" has been widely used in buck or boost converters. Figure 3 shows one example of the DCR current sensing scheme in a four-switch buck-boost converter 300. As shown in Figure 3, four-switch buck-boost converter 300 includes switches 305-308, inductor 303 and output capacitor 309. The equivalent DC resistance $R_{DCR}$ of inductor 303 is represented by DCR resistor 304 in Figure 3. The current in inductor 303 is sensed by providing series-connected sensing resistor 301 and sensing capacitor 302 in parallel to inductor 303 (and equivalent DCR resistor 304). The DCR inductor current-sensing scheme attempts to match the time constant of inductor current $i_L$, given by the ratio of inductance $L$ of inductor 303 to its equivalent DC resistance $R_{DCR}$ (i.e., $L/R_{DCR}$), by the product of resistance $R_s$ of sensing resistor 301 and capacitance $C_s$ of sensing capacitor 302. Under this scheme the sensed voltage $V_{sense}$ across sensing capacitor 302 is proportional to the product of inductor current $i_L$ and DC resistance $R_{DCR}$ (i.e., $V_{sense} = i_L * R_{DCR}$). However, as explained in the article "10MHz Current Mode 4 Switch Buck Boost Converter (4SBBC) for Polar Modulation," by Park et al., published in the Proceedings of the 23rd Annual Applied Power Electronics Conference, pp-1977-83, the rail-to-rain common mode voltage range and the high common mode noise in the sensed voltage, due to switching in the converter output switches, make the current-sensing circuit complicated and very difficult to implement.

SUMMARY

According to one embodiment of the present invention, an inductor current-sensing circuit for measuring a current in an inductor includes (a) a first RC network coupled between a first terminal of the inductor and a reference voltage source; and (b) a second RC network coupled between a second terminal of the inductor and the reference voltage source. The first RC network and the second RC network each have a time constant substantially equal to the ratio between the inductance and the DC resistance of the inductor. The inductor which current is being measured may be a primary inductor of a four-switch buck boost converter receiving an input voltage and providing an output voltage.

In one embodiment, the reference voltage source provides a virtual ground reference, which may be connected to a system ground reference through a decoupling capacitor. The virtual ground reference may refer to the output voltage, the input voltage, and an average between the voltages across the inductor, when the four-switch buck boost converter operates in a buck mode, a boost mode and a buck-boost mode, respectively.

In one embodiment, the inductor current-sensing circuit may further include a third sensing capacitor connected between the first RC network and the second RC network, with the third sensing capacitor having a greater capacitance than each of the effective capacitances of the first and the second RC networks.

According to another embodiment of the present invention, an inductor current-sensing circuit for measuring a current in an inductor includes: (a) a sensing resistor connected in series with the inductor; (b) a first RC network coupled between a first terminal of the sensing resistor and a reference voltage source; and (c) a second RC network coupled between a second terminal of the sensing resistor and the reference voltage source. The first RC network and the second RC network may each have a time constant substantially equal to the ratio between the inductance of the inductor and the DC resistance of the inductor. The first and second RC network may each include (a) a sensing capacitor; (b) a first resistor coupled between a terminal of the sensing resistor and a first terminal of the sensing capacitor; a blocking capacitor coupled at one terminal to one terminal of the inductor; and a second resistor coupled between the first terminal of the sensing capacitor and the other terminal of the blocking capacitor. The ratio in resistance value between the second resistor of the second RC network and the first resistor of the second resistor network less one may be substantially the ratio in resistance value between the sensing resistor and the equivalent DC resistance of the inductor. The blocking capacitor in each of the first and second RC networks may have a capacitance that is greater than the capacitance of the sensing capacitor in the corresponding one of the first and second RC networks.

An inductor current sensed using a method of the present invention may be used to control switching in a four-switch buck boost converter. An example of such control may be found, for example, in the Copending Provisional Patent Application II.

The present invention is better understood upon consideration of the detailed description below in conjunction with the accompanying drawings.

BRIEF DESCRIPTION OF THE DRAWINGS

Figure 1 shows a first current-sensing technique using sensing resistors in power converter 100.

Figure 2 shows another inductor current-sensing technique in four-switch power converter 200.

Figure 3 shows one example of the DCR current sensing scheme in a four-switch buck-boost converter 300.

Figure 4 shows four-switch buck boost converter 400 implementing a DCR current-sensing method in accordance with one embodiment of the present invention.

Figure 5 shows four-switch buck boost converter 500 which eliminates DC bias voltages at sensing capacitors 402-a and 402-b by referring RC filters 410 and 420 to a virtual ground, in accordance with one embodiment of the present invention.

Figure 6 shows four-switch buck boost converter 600 which provides more robust performance than four-switch buck boost converter 500 of Figure 5 when operating in buck-boost mode, in accordance with one embodiment of the present invention.

Figure 7 shows four-switch buck-boost converter 700 using sensing resistor 701, rather than the DC resistance of inductor 303, to sense the current in inductor 303, in accordance with one embodiment of the present invention.

Figure 8 shows four-switch buck-boost converter 800, which provides sensing capacitor 801 across nodes $I_{sense+}$ and $I_{sense-}$ and a virtual ground node 802, according to one embodiment of the present invention.

In these figures, like elements are assigned like reference numerals.

DETAILED DESCRIPTION OF THE PREFERRED EMBODIMENTS

Figure 4 shows four-switch buck boost converter 400 implementing a DCR current-sensing method in accordance with one embodiment of the present invention. In contrast with four-switch buck boost converter 300 of Figure 3, which provides sensing resistor 301 and sensing capacitor 302 in parallel to inductor 303, four-switch buck boost converter 400 provides RC filters 410 and 420, consisting of sensing resistor 401-a and sensing capacitor 402-a and sensing resistor 401-b and sensing capacitor 402-b, respectively. The sensed voltage across nodes $I_{sense+}$ and Isense- in RC filters 410 and 420, respectively, represent the differential voltage across switching nodes SW1 and SW2. By matching the time constant $L/R_{DCR}$ to the time constant $R_sC_s$ in each of RC filters 410 and 420, the sensed voltage $V_{sense}$ is directly proportional to the inductor current $i_L$ and DC resistance $R_{DCR}$ of inductor 303 and $V_{sense} = I_{sense+} - I_{sense-} = i_L * R_{DCR}$ (see Figure 4).

In the embodiment of Figure 4, lossless full-inductor current-sensing is achieved without high common-mode noise. However, sensing capacitors 402-a and 402-b should be kept very well-matched, so as to eliminate any transient differential error. Such matching may be achieved, for example, by fabricating both sensing capacitors on the same silicon substrate. Also, the DC bias voltages at sensing capacitors 402-a and 402-b vary according to the input and output voltages. Preferably, sensing capacitors 402-a and 402-b should be implemented by capacitors with low voltage coefficients, so as to maintain the matched time constants over wide voltage range.

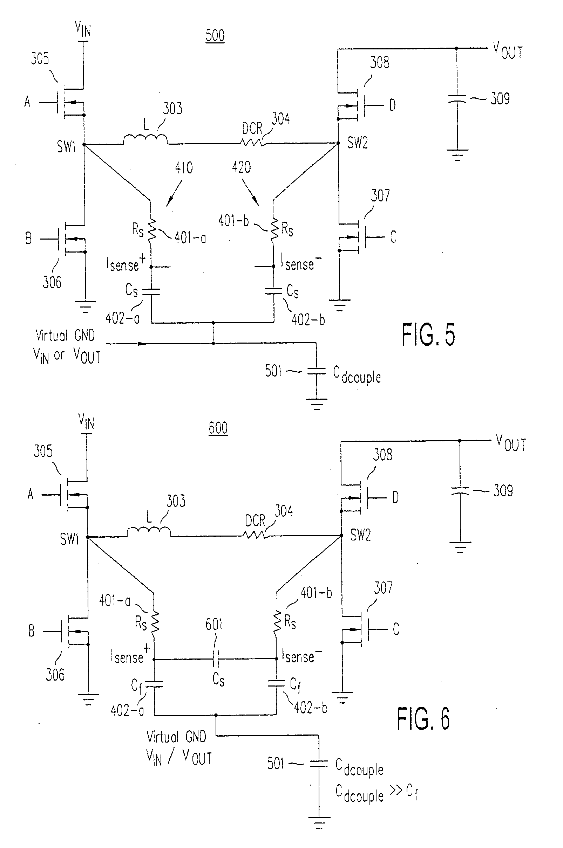

Figure 5 shows four-switch buck boost converter 500 which eliminates DC bias voltages at sensing capacitors 402-a and 402-b by referring RC filters 410 and 420 to a virtual ground, in accordance with one embodiment of the present invention. As shown in Figure 5, rather than connecting sensing capacitors 402-a and 402-b to system ground, sensing capacitors 402-a and 402-b are coupled to a virtual ground, which may be a different reference voltage, depending on the operation mode. For example, in the buck mode (i.e., the operating mode in which switch 308 is always conducting), the virtual ground may be coupled to output voltage $V_{OUT}$. In the boost mode (i.e., in the operating mode in which switch 305 is always conducting), the virtual ground may be coupled to input voltage $V_{IN}$. In the buck-boost mode, the virtual ground may be controlled to track the average voltage of nodes SW1 and SW2. Decoupling capacitor 501 maintains the voltage at the virtual ground during any mode switching, and transient voltage excursions. In four-switch buck boost converter 500 of Figure 5, the resistors 401-a and 401-b and sensing capacitors 402-a and 402-b are also designed to match the time constant of inductor current $i_L$ (i.e., $L/R_{DCR} = R_sC_s$; see Figure 5). The virtual ground is preferably well-maintained during buck-boost mode, so as to avoid any error due to mismatch of sensing capacitors 402-a and 402-b during transients. Again sensing capacitors 402-a and 402-b should be well-matched to avoid transient errors in buck-boost mode operations.

Figure 6 shows four-switch buck boost converter 600 which provides more robust performance than four-switch buck boost converter 500 of Figure 5 when operating in buck-boost mode, in accordance with one embodiment of the present invention. Four-switch buck boost converter 600 improves transient performance by including sensing capacitor 601 (with a capacitance $C_S$) in addition to sensing capacitors 402-a and 402-b, which are each now provided a capacitance $C_f$). In four-switch buck boost converter 600, the time constant of inductor current $i_L$ is matched according to the equation

$$\frac{L}{R_{DCR}} = 2R_S\left(C_S + \frac{C_f}{2}\right)$$ (See, Figure 6). In this equation, the term inside the parentheses may be designed such that capacitance $C_s$ of capacitor 601 is dominant (i.e., capacitance $C_f$ is selected to be much less than capacitance $C_s$), so as to allow capacitance $C_S$ to match the time constant in the inductor current. Because this approach reduces the sensitivity to sensing capacitors 402-a and 402-b, any effect arising from a mismatch in capacitance between capacitors 402-a and 402-b is significantly minimized.

A simulation was performed to investigate the modified DCR current-sensing method in four-switch buck boost converter 600 of Figure 6. In this simulation, inductor 303 is provided an inductance $L$ = 4.7uH, DC resistance $R_{DCR}$ = 10 mΩ, sensing resistor 401-a and 401-b are each provided resistance $R_S$ = 33.33 kΩ, and sensing capacitor 601 is provided a nominal capacitance $C_S$ of 0.0047uF, capacitors 402-a and 402-b are provided capacitances of 0.0037 uF and 0.0057 uF, respectively, to simulate a 10% mismatch of nominal capacitance $C_f$ between capacitors 402-a and 402-b. In this simulation, four-switch buck-boost converter 600 is operated in buck-boost mode. The input voltage is initially ramped up from 0 volts to 10 volts over 0.1 ms, is then maintained at 10 volts for 0.4 ms, and then allowed to rise to 13 volts over 0.15 ms, where it is held until 2.0 ms. During that period, the output voltage is initially at zero, but rises to about 15 volts by 0.7 ms, and is regulated at that level until 1.3 ms, when it is abruptly grounded. The difference between the current in inductor 303 and the measured current based on the voltage drop across capacitor 601 is found to be insignificant throughout the simulation period. The 10% mismatch in capacitors 402-a and 402-b is estimated to cause a transient voltage of less than 4 mV across sense capacitor 601.

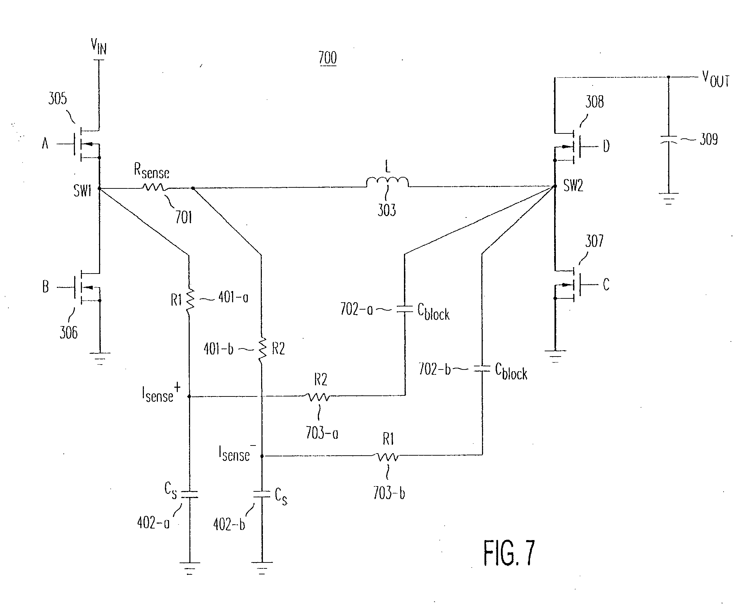

For high precision operations, a sensing resistor may be provided in place of DCR 304 (i.e., the DC resistance of inductor 303), as the DC resistance of an inductor is less reliable. Figure 7 shows four-switch buck-boost converter 700 using sensing resistor 701 to sense the current in inductor 303, in accordance with one embodiment of the present invention. As shown in Figure 7, sensing resistor 701, with a resistance $R_{sense}$, is connected in series with inductor 303 (resistor 701 maybe connected to either node SW1 or node SW2, i.e., on either side of inductor 303). The terminals of sensing resistor 701 are each respectively coupled to ground through serially connected RC circuits formed by sensing resistors 401-a and 401-b and sensing capacitors 402-a and 402-b. In addition, resistors 703-a and 703-b and blocking capacitors 702-a and 702-b form two RC circuits that respectively connect nodes Isense+ and Isense- to node SW2 at the terminal of inductor 303 away from sensing resistor 701. Blocking capacitors 702-a and 702-b are each selected to have a capacitance $C_{block}$ that is much less than the capacitance Cs in each of sensing capacitor 402-a and 402-b. As shown in Figure 7, resistors 401-a and 703-b both have a resistance $R_1$ and resistors 401-b and 703-a both have a resistance $R_2$. In this configuration, capacitance Cs and resistor values $R_1$ and $R_2$ may be selected such that the RC time constant of resistor 401-b and sensing capacitor 402-b can be matched to the inductor 303 (i.e., $\frac{L}{DCR} = R_2 C_S$), while the resistance relationship $\frac{R_2}{R_1} - 1 = \frac{R_{sense}}{DCR}$ holds (see, Figure 7). The voltage drop $V_{sense}$ across nodes $I_{sense+}$ and Isense- is given by the product of inductor current $i_L$ and sensing resistance $R_{sense}$.

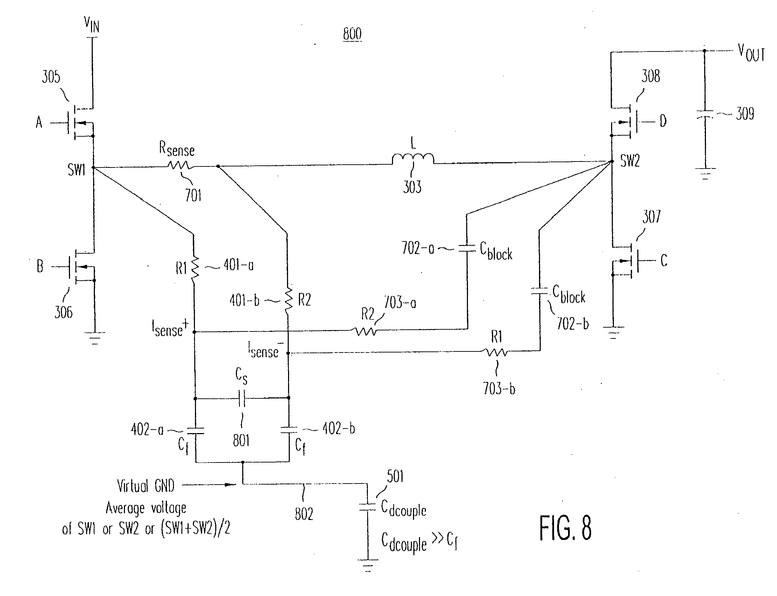

The virtual ground technique and the technique of providing a sensing capacitor across $I_{sense+}$ and $I_{sense-}$ to avoid the effects of a capacitance mismatch in capacitors 402-a and 402-b, as discussed above with respect to Figures 5 and 6, may also be applicable to four-switch buck-boost converter 700 of Figure 7. Figure 8 shows four-switch buck-boost converter 800, which provides sensing capacitor 801 across nodes $I_{sense+}$ and $I_{sense-}$ and virtual ground node 802, according to one embodiment of the present invention. As shown in Figure 8, decoupling capacitor (with capacitance $C_{dcouple}$) isolates virtual ground node 802 from the true ground reference. The voltage at virtual ground node 802 may be controlled to be equal to the average voltage at node SW1, node SW2, or their average $\frac{(V_{SW1}+V_{SW2})}{2}$. In this configuration of four-switch buck-boost converter 800 of Figure 8, by choosing sensing capacitance Cs to be greater than capacitance $C_f$ in each of capacitors 402-a and 402-b and much less than capacitance $C_{block}$, the time constant of inductor 303 is matched according to the equation $\frac{L}{DCR} = R_2 \left( C_S + \frac{C_f}{2} \right)$, while the resistance relationship $\frac{R_2}{R_1} - 1 = \frac{R_{sense}}{DCR}$ holds. The voltage drop $V_{sense}$ across nodes $I_{sense+}$ and Isense- is given by the product of inductor current $i_L$ and sensing resistance $R_{sense}$ (see, Figure 8). Of course, as in four-switch buck-boost converter 700 of Figure 7, resistor 701 may be connected to either node SW1 or node SW2, i.e., on either side of inductor 303.

The present invention is applicable to any application that requires inductor current-sensing, such as sensing an average inductor current. The methods illustrated in Figures 4-6 may be used to modify an inductor current through high-pass or lowpass filtering, thus providing a lossless method to sense a continuous inductor current without incurring a DC error. Methods of the present invention are suitable for use in both voltage-mode or current-mode control of a four-switch buck boost converter. The present invention may be implemented in an integrated circuit.

The above-detailed description is provided to illustrate the specific embodiments of the present invention and is not intended to be limiting. Various modifications and variations within the scope of the present invention are possible. The present invention is set forth in the following claims.

Further embodiments, features and advantages are described by means of the following items:

1. An inductor current-sensing circuit for measuring a current in an inductor having an inductance and an equivalent DC resistance, comprising:

a first RC network coupled between a first terminal of the inductor and a reference voltage source; and

a second RC network coupled between a second terminal of the inductor and the reference voltage source.

2. The inductor current-sensing circuit of item 1, wherein the first RC network and the second RC network each have a time constant substantially equal to the ratio between the inductance and the DC resistance.

3. The inductor current-sensing circuit of item 1 or 2, wherein the inductor is a primary inductor of a four-switch buck boost converter receiving an input voltage and providing an output voltage.

4. The inductor current-sensing circuit of item 3, wherein the reference voltage source provides a virtual ground reference.

5. The inductor current-sensing circuit of item 4, further comprising a decoupling capacitor connecting the virtual ground reference to a system ground reference.

6. The inductor current-sensing circuit of item 4 or 5, wherein the virtual ground reference refers to the output voltage when the four-switch buck boost converter operates in a buck mode.

7. The inductor current-sensing circuit of item 4 or 5, wherein the virtual ground reference refers to the input voltage when the four-switch buck boost converter operates in a boost mode.

8. The inductor current-sensing circuit of item 4 or 5, wherein the virtual ground reference refers to an average of a voltage across a first terminal of the inductor and a second terminal of the inductor, when the four-switch buck boost converter operates in a buck-boost mode.

9. The inductor current-sensing circuit of one of items 4 to 8, further comprising a sensing capacitor connected between the first RC network and the second RC network.

10. The inductor current-sensing circuit of item 9, wherein the sensing capacitor has a greater capacitance than an effective capacitance of each of the first and the second RC networks.

11. A method for measuring a current in an inductor having an inductance and an equivalent DC resistance, comprising:

connecting a first RC network between a first terminal of the inductor and a reference voltage source;

connecting a second RC network coupled between a second terminal of the inductor and the reference voltage source; and

measuring a voltage between a node in the first RC network and a node in the second RC network.

12. The method of method 11, wherein the node in the first RC network and the node in the second RC network each correspond to a terminal of a sensing capacitor in each RC network.

13. The method of item 11 or 12, wherein the first RC network and the second RC network each have a time constant substantially equal to the ratio between the inductance and the DC resistance.

14. The method of one of items 11 to 13, wherein the inductor is a primary inductor of a four-switch buck boost converter receiving an input voltage and providing an output voltage.

15. The method of item 14, wherein the reference voltage source provides a virtual ground reference.

16. The method of item 15, further comprising a decoupling capacitor connecting the virtual ground reference to a system ground reference.

17. The method of item 15 or 16, wherein the virtual ground reference refers to the output voltage when the four-switch buck boost converter operates in a buck mode.

18. The method of item 15 or 16, wherein the virtual ground reference refers to the input voltage when the four-switch buck boost converter operates in a boost mode.

19. The method item 15 or 16, wherein the virtual ground reference refers to an average of a voltage across a first terminal of the inductor and a second terminal of the inductor, when the four-switch buck boost converter operates in a buck-boost mode.

20. The method of one of items 15 to 19, further comprising connecting a sensing capacitor between the first RC network and the second RC network.

21. The method of item 20, wherein the sensing capacitor has a greater capacitance than an effective capacitance of each of the first and the second RC networks.

22. An inductor current-sensing circuit for measuring a current in an inductor having an inductance and an equivalent DC resistance, comprising:

a sensing resistor connected in series with the inductor;

a first RC network coupled between a first terminal of the sensing resistor and a reference voltage source; and

a second RC network coupled between a second terminal of the sensing resistor and the reference voltage source.

23. The inductor current-sensing circuit of item 22, wherein the first RC network and the second RC network each have a time constant substantially equal to the ratio between the inductance and the DC resistance.

24. The inductor current-sensing circuit of item 22 or 23, wherein the first RC network comprises:

a sensing capacitor having a first terminal and a second terminal, the second terminal being coupled to the reference voltage source;

a first resistor coupled between the first terminal of the sensing resistor and the first terminal of the sensing capacitor;

a blocking capacitor having a first terminal and a second terminal, the second terminal of the blocking capacitor being coupled to one terminal of the inductor; and

a second resistor coupled between the first terminal of the sensing capacitor and the first terminal of the blocking capacitor.

25. The inductor current-sensing circuit of item 24, wherein the second RC network comprises:

a sensing capacitor having a first terminal and a second terminal, the second terminal being coupled to the reference voltage source;

a first resistor coupled between the second terminal of the sensing resistor and the first terminal of the sensing capacitor;

a blocking capacitor having a first terminal and a second terminal, the second terminal of the blocking capacitor being coupled to one terminal of the inductor; and

a second resistor coupled between the first terminal of the sensing capacitor and the first terminal of the blocking capacitor.

26. The inductor current-sensing circuit of item 25, wherein the ratio in resistance value between the second resistor of the second RC network and the first resistor of the second resistor network less one is substantially the ratio in resistance value between the sensing resistor and the equivalent DC resistance of the inductor.

27. The inductor current-sensing circuit of item 25 or 26, wherein the blocking capacitor in each of the first and the second RC networks has a capacitance that is greater than the capacitance of the sensing capacitor in the corresponding one of the first and second RC networks.

28. The inductor current-sensing circuit of one of items 22 to 27, wherein the inductor is a primary inductor of a four-switch buck boost converter receiving an input voltage and providing an output voltage.

29. The inductor current-sensing circuit of item 28, wherein the reference voltage source provides a virtual ground reference.

30. The inductor current-sensing circuit of item 29, further comprising a decoupling capacitor connecting the virtual ground reference to a system ground reference.

31. The inductor current-sensing circuit of item 29 or 30, wherein the virtual ground reference refers to the output voltage when the four-switch buck boost converter operates in a buck mode.

32. The inductor current-sensing circuit of item 29 or 30, wherein the virtual ground reference refers to the input voltage when the four-switch buck boost converter operates in a boost mode.

33. The inductor current-sensing circuit of item 29 or 30, wherein the virtual ground reference refers to an average of a voltage across a first terminal of the sensing resistor and one terminal of the inductor, when the four-switch buck boost converter operates in a buck-boost mode.

34. The inductor current-sensing circuit of one of items 29 to 33, further comprising an additional sensing capacitor connected between the first RC network and the second RC network.

35. The inductor current-sensing circuit of item 34, wherein the additional sensing capacitor has a greater capacitance than the capacitance of the sensing capacitor in each of the first and the second RC networks.

36. A method for measuring a current in an inductor having an inductance and an equivalent DC resistance, comprising:

connecting a sensing resistor in series with the inductor;

coupling a first RC network between a first terminal of the sensing resistor and a reference voltage source;

coupling a second RC network between a second terminal of the sensing resistor and the reference voltage source; and

measuring a voltage between a node in the first RC network and a node in the second RC network.

37. The method of item 36, wherein the first RC network and the second RC network each have a time constant substantially equal to the ratio between the inductance and the DC resistance.

38. The method of item 36 or 37, wherein the first RC network comprises:

a sensing capacitor having a first terminal and a second terminal, the second terminal being coupled to the reference voltage source;

a first resistor coupled between the first terminal of the sensing resistor and the first terminal of the sensing capacitor;

a blocking capacitor having a first terminal and a second terminal, the second terminal of the blocking capacitor being coupled to one terminal of the inductor; and

a second resistor coupled between the first terminal of the sensing capacitor and the first terminal of the blocking capacitor.

39. The method of one of items 36 to 38, wherein the second RC network comprises:

a sensing capacitor having a first terminal and a second terminal, the second terminal being coupled to the reference voltage source;

a first resistor coupled between the second terminal of the sensing resistor and the first terminal of the sensing capacitor;

a blocking capacitor having a first terminal and a second terminal, the second terminal of the blocking capacitor being coupled to one terminal of the inductor; and

a second resistor coupled between the first terminal of the sensing capacitor and the first terminal of the blocking capacitor.

40. The method of item 39, wherein the voltage is measured across the first terminal of the sensing capacitor in the first RC network and the first terminal of the sensing capacitor in the second RC network.

41. The method of item 39 or 40, wherein ratio in resistance value between the second resistor of the second RC network and the first resistor of the second resistor network less one is substantially the ratio in resistance value between the sensing resistor and the equivalent DC resistance of the inductor.

42. The method of one of items 39 to 42, wherein the blocking capacitor in each of the first and the second RC networks has a capacitance that is greater than the capacitance of the sensing capacitor in the corresponding one of the first and the second RC networks.

43. The method of one of items 36 to 42, wherein the inductor is a primary inductor of a four-switch buck boost converter receiving an input voltage and providing an output voltage.

44. The method of item 43, wherein the reference voltage source provides a virtual ground reference.

45. The method of item 44, further comprising connecting a decoupling capacitor connecting the virtual ground reference to a system ground reference.

46. The method of item 44 or 45, wherein the virtual ground reference refers to the output voltage when the four-switch buck boost converter operates in a buck mode.

47. The method of item 44 or 45, wherein the virtual ground reference refers to the input voltage when the four-switch buck boost converter operates in a boost mode.

48. The method of item 44 or 45, wherein the virtual ground reference refers to an average of a voltage across a first terminal of the sensing resistor and one terminal of the inductor,'when the four-switch buck boost converter operates in a buck-boost mode.

49. The method of one of items 44 to 48, further comprising connecting an additional sensing capacitor between the first RC network and the second RC network.

50. The inductor current-sensing circuit of item 49, wherein the additional sensing capacitor has a greater capacitance than the capacitance of the sensing capacitor in each of the first and the second RC networks.

**Claims**

1. An inductor current-sensing circuit for measuring a current in an inductor having an inductance and an equivalent DC resistance, comprising:

a first RC network coupled between a first terminal of the inductor and a reference voltage source; and
a second RC network coupled between a second terminal of the inductor and the reference voltage source.

2. The inductor current-sensing circuit of Claim 1, wherein the inductor is a primary inductor of a four-switch buck boost converter receiving an input voltage and providing an output voltage.

3. The inductor current-sensing circuit of Claim 2, wherein the reference voltage source provides a virtual ground reference.

4. The inductor current-sensing circuit of Claim 3, wherein the virtual ground reference refers to an average of a voltage across a first terminal of the inductor and a second terminal of the inductor, when the four-switch buck boost converter operates in a buck-boost mode.

5. The inductor current-sensing circuit of Claim 3, further comprising a sensing capacitor connected between the first RC network and the second RC network, wherein the sensing capacitor may have a greater capacitance than an effective capacitance of each of the first and the second RC networks.

6. A method for measuring a current in an inductor having an inductance and an equivalent DC resistance, comprising:

connecting a first RC network between a first terminal of the inductor and a reference voltage source;
connecting a second RC network coupled between a second terminal of the inductor and the reference voltage source; and
measuring a voltage between a node in the first RC network and a node in the second RC network.

7. The method of Claim 6, wherein the node in the first RC network and the node in the second RC network each correspond to a terminal of a sensing capacitor in each RC network.

8. An inductor current-sensing circuit for measuring a current in an inductor having an inductance and an equivalent DC resistance, comprising:

a sensing resistor connected in series with the inductor;
a first RC network coupled between a first terminal of the sensing resistor and a reference voltage source; and
a second RC network coupled between a second terminal of the sensing resistor and the reference voltage source.

9. The inductor current-sensing circuit of Claim 1 or 8, wherein the first RC network and the second RC network each have a time constant substantially equal to the ratio between the inductance and the DC resistance.

10. The inductor current-sensing circuit of Claim 8, wherein the first RC network comprises:

a sensing capacitor having a first terminal and a second terminal, the second terminal being coupled to the reference voltage source;
a first resistor coupled between the first terminal of the sensing resistor and the first terminal of the sensing capacitor;
a blocking capacitor having a first terminal and a second terminal, the second terminal of the blocking capacitor being coupled to one terminal of the inductor; and
a second resistor coupled between the first terminal of the sensing capacitor and the first terminal of the blocking capacitor.

11. The inductor current-sensing circuit of Claim 10, wherein the second RC network comprises:

a sensing capacitor having a first terminal and a second terminal, the second terminal being coupled to the reference voltage source;
a first resistor coupled between the second terminal of the sensing resistor and the first terminal of the sensing capacitor;
a blocking capacitor having a first terminal and a second terminal, the second terminal of the blocking capacitor being coupled to one terminal of the inductor; and
a second resistor coupled between the first terminal of the sensing capacitor and the first terminal of the blocking capacitor;

wherein the ratio in resistance value between the second resistor of the second RC network and the first resistor of the second resistor network less one may be substantially the ratio in resistance value between the sensing resistor and the equivalent DC resistance of the inductor.

12. The inductor current-sensing circuit of Claim 8, wherein the inductor is a primary inductor of a four-switch buck boost converter receiving an input voltage and providing an output voltage.

13. The inductor current-sensing circuit of Claim 12, wherein the reference voltage source provides a virtual ground reference.

14. The inductor current-sensing circuit of Claim 3 or 13, further comprising a decoupling capacitor connecting the virtual ground reference to a system ground reference.

15. The inductor current-sensing circuit of Claim 3 or 13, wherein the virtual ground reference refers to the output voltage when the four-switch buck boost converter operates in a buck mode.

16. The inductor current-sensing circuit of Claim 3 or 13, wherein the virtual ground reference refers to the input voltage when the four-switch buck boost converter operates in a boost mode.

17. The inductor current-sensing circuit of Claim 13, further comprising an additional sensing capacitor connected between the first RC network and the second RC network and wherein the additional sensing capacitor may have a greater capacitance than the capacitance of the sensing capacitor in each of the first and the second RC networks.

**18.** A method for measuring a current in an inductor having an inductance and an equivalent DC resistance, comprising:

connecting a sensing resistor in series with the inductor;
coupling a first RC network between a first terminal of the sensing resistor and a reference voltage source;
coupling a second RC network between a second terminal of the sensing resistor and the reference voltage source; and
measuring a voltage between a node in the first RC network and a node in the second RC network.

**19.** The method of Claim 18, wherein the second RC network comprises:

a sensing capacitor having a first terminal and a second terminal, the second terminal being coupled to the reference voltage source;
a first resistor coupled between the second terminal of the sensing resistor and the first terminal of the sensing capacitor;
a blocking capacitor having a first terminal and a second terminal, the second terminal of the blocking capacitor being coupled to one terminal of the inductor; and
a second resistor coupled between the first terminal of the sensing capacitor and the first terminal of the blocking capacitor;
wherein the voltage may be measured across the first terminal of the sensing capacitor in the first RC network and the first terminal of the sensing capacitor in the second RC network.

FIG. 1

FIG. 2

FIG. 3

FIG. 4

FIG. 5

FIG. 6

FIG. 7

FIG. 8

EP 3 002 861 A1

Europäisches
Patentamt

European
Patent Office

Office européen
des brevets

# EUROPEAN SEARCH REPORT

**Application Number**

EP 15 00 2415

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/109680 A2 (DE VRIES IAN DOUGLAS [ZA]) 16 August 2012 (2012-08-16) | 1-7 | INV. H02M3/158 G01R19/00 |
| Y | * page 1 - page 3 * <br> * figure 2 * | 8-19 | |
| Y | US 2010/052611 A1 (LYLE JR ROBERT L [US]) 4 March 2010 (2010-03-04) * paragraph [0019] * * figures 2-5 * | 8-19 | ADD. H02M1/00 |
| A | US 7 196 499 B1 (LIPCSEI LASZLO [US]) 27 March 2007 (2007-03-27) * column 3, line 66 - column 4, line 13 * * column 5, line 11 - column 5, line 40 * * figure 2 * | 1-19 | |

TECHNICAL FIELDS
SEARCHED (IPC)

H02M
G01R

The present search report has been drawn up for all claims

| Place of search | Date of completion of the search | Examiner |
|---|---|---|
| The Hague | 24 February 2016 | Madouroglou, E |

EPO FORM 1503 03.82 (P04C01)

**EP 3 002 861 A1**

## ANNEX TO THE EUROPEAN SEARCH REPORT
## ON EUROPEAN PATENT APPLICATION NO.

EP 15 00 2415

24-02-2016

| Patent document cited in search report | | Publication date | Patent family member(s) | | Publication date |
|---|---|---|---|---|---|
| WO 2012109680 | A2 | 16-08-2012 | CN | 103392131 A | 13-11-2013 |
| | | | EP | 2673648 A2 | 18-12-2013 |
| | | | JP | 2014506776 A | 17-03-2014 |
| | | | US | 2013307511 A1 | 21-11-2013 |
| | | | WO | 2012109680 A2 | 16-08-2012 |
| US 2010052611 | A1 | 04-03-2010 | US | 2010052611 A1 | 04-03-2010 |
| | | | US | 2015035504 A1 | 05-02-2015 |
| US 7196499 | B1 | 27-03-2007 | TW | I310258 B | 21-05-2009 |
| | | | US | 7196499 B1 | 27-03-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62054587 B

- US 62088433 B

**Non-patent literature cited in the description**

- **PARK et al.** 10MHz Current Mode 4 Switch Buck Boost Converter (4SBBC) for Polar Modulation. *the Proceedings of the 23rd Annual Applied Power Electronics Conference,* 1977-83